(19) Europäisches Patentamt
European Patent Office
Office européen des brevets

(11) **EP 3 907 895 B1**

(12) **FASCICULE DE BREVET EUROPEEN**

(45) Date de publication et mention
de la délivrance du brevet:
**21.12.2022 Bulletin 2022/51**

(21) Numéro de dépôt: **21170948.0**

(22) Date de dépôt: **28.04.2021**

(51) Classification Internationale des Brevets (IPC):
**H04B 1/7163** [(2011.01)]

(52) Classification Coopérative des Brevets (CPC):
**H04B 1/71637**

(54) **MÉTHODE DE RÉCEPTION D'UN SIGNAL MODULÉ ET RÉCEPTEUR ASSOCIÉ**

VERFAHREN ZUM EMPFANG EINES MODULIERTEN SIGNALS UND EMPFÄNGER DAFÜR

METHOD FOR RECEIVING A MODULATED SIGNAL AND RECEIVER THEREFOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.05.2020 FR 2004383**

(43) Date de publication de la demande:
**10.11.2021 Bulletin 2021/45**

(73) Titulaire: **Commissariat à l'Energie Atomique et
aux Energies
Alternatives
75015 Paris (FR)**

(72) Inventeurs:
• **BICAIS, Simon
38054 GRENOBLE CEDEX 09 (FR)**
• **DORE, Jean-Baptiste
38054 GRENOBLE CEDEX 09 (FR)**

(74) Mandataire: **Atout PI Laplace
Immeuble "Visium"
22, avenue Aristide Briand
94117 Arcueil Cedex (FR)**

(56) Documents cités:
**WO-A1-2004/001998      US-A1- 2005 232 381**

• **QIN ZHOU ET AL: "A flexible back-end with
optimum threshold estimation for OOK based
energy detection IR-UWB receivers",
ULTRA-WIDEBAND (ICUWB), 2011 IEEE
INTERNATIONAL CONFERENCE ON, IEEE, 14
septembre 2011 (2011-09-14), pages 130-134,
XP032115634, DOI:
10.1109/ICUWB.2011.6058811 ISBN:
978-1-4577-1763-5**
• **SILVIA SOLDÀ ET AL: "A 5Mb/s UWB-IR CMOS
transceiver with a 186 pJ/b and 150 pJ/b TX/RX
energy request", ESSCIRC, 2010 PROCEEDINGS
OF THE, IEEE, PISCATAWAY, NJ, USA, 14
septembre 2010 (2010-09-14), pages 498-501,
XP031788417, ISBN: 978-1-4244-6662-7**

## Description

### Champ d'application

L'invention concerne une méthode de réception et démodulation d'un signal modulé en amplitude, position ou largeur d'impulsion et un récepteur associé.

En particulier, l'invention vise la problématique générale de la démodulation de signaux larges bandes et à hautes fréquences, par exemple des signaux dans le spectre sub-TeraHertz de l'ordre de 90 à 300 GHz. Cette bande de fréquences présente l'avantage d'être peu exploitée et présente ainsi une opportunité pour développer des systèmes de communications radio haut débit.

Les applications visées dans ce domaine concernent notamment les liaisons haut débit entre un point d'accès et un réseau cœur, les communications à faible distance à haut débit ou encore les liaisons entre une station de base et plusieurs utilisateurs.

### Problème soulevé

Un premier problème à résoudre dans ce contexte concerne la capacité d'un récepteur à numériser une bande de fréquence large. En effet, les technologies de convertisseurs analogiques numériques sont limitées de ce point de vue et ne permettent pas de numériser de telles bandes de fréquence. En particulier, ce problème est d'autant plus vrai pour une implémentation dans des terminaux mobiles à ressources limitées.

Un second problème à résoudre concerne les imperfections de phase des oscillateurs haute fréquence qui engendrent un bruit de phase non négligeable dans le spectre sub-TeraHertz.

### Art antérieur

Une première solution connue pour démoduler des signaux large bande dans le spectre sub-TeraHertz consiste à implémenter une architecture cohérente en agrégeant plusieurs canaux fréquentiels de largeur plus petite. Par exemple, la bande totale de fréquence est décomposée en canaux de 1 GHz qui sont chacun numérisé et démodulé indépendamment.

Cette première solution permet de s'adapter aux contraintes des convertisseurs analogiques numériques en réduisant la fréquence d'échantillonnage pour chaque canal mais présente l'inconvénient d'être très sensible au bruit de phase car les oscillateurs de fréquence associés à chaque canal fonctionnent à haute fréquence. Les dégradations dues au bruit de phase nécessitent de mettre en œuvre un algorithme de démodulation adapté plus complexe pour corriger ces imperfections.

Une autre solution décrite dans la demande de brevet américaine US20050232381 concerne une démodulation d'un signal large bande par projection sur une base IQ pour des applications UWB (Ultra Wide Band). Cette solution concerne des applications de localisation et mesures de temps d'arrivée et n'implique donc pas de démodulation. Par ailleurs, la réception mise en œuvre est cohérente en phase ce qui engendre toujours des dégradations dues au bruit de phase au niveau des oscillateurs de fréquence.

L'article "A flexible back-end with optimum threshold estimation for OOK based energy detection IR-UWB receivers" par Qin Zhou et al., présenté à IEEE INTERNATIONAL CONFERENCE ON ULTRA-WIDEBAND, 14 septembre 2011, pages 130-134, XP032115634, ISBN: 978-1-4577-1763-5, divulgue une méthode de réception d'un signal modulé comprenant les étapes de : effectuer la mise au carré du signal reçu, intégrer le carré du signal reçu, numériser et démoduler.

### Réponse au problème et apport solution

L'invention propose une méthode de réception et démodulation d'un signal large bande qui combine une détection d'énergie et une projection du signal sur une base de signaux analogique, par exemple une base de Fourier. Les projections parallèles sont réalisées en corrélant le carré du signal reçu avec un ensemble de signaux analogiques constituant une base de projection.

Les résultats des projections sont ensuite intégrés, numérisés puis démodulés conjointement via un algorithme du maximum de vraisemblance appliqué à un ou plusieurs symboles modulés consécutifs.

Les applications visées concernent notamment la transmission de signaux dans des bandes de fréquences sub-TeraHertz.

L'invention permet de diminuer la fréquence d'échantillonnage des convertisseurs analogique numérique du fait de la projection parallèle sur une base de signaux analogiques et de la démodulation conjointe d'un ou plusieurs symboles modulés. Elle permet aussi de limiter l'impact du bruit de phase pour des signaux très haute fréquence.

Par ailleurs l'implémentation proposée présente l'avantage d'une approche asynchrone. L'utilisation de signaux en quadrature comme base de projection permet de relâcher les contraintes de synchronisation entre l'émetteur et le récepteur.

L'invention permet également la démodulation d'un signal impulsionnel avec des convertisseurs dont la fréquence d'échantillonnage est plus faible que la fréquence des impulsions du signal.

L'invention a ainsi pour objet une méthode de réception d'un signal modulé et un récepteur d'un tel signal modulé tels que décrits dans les revendications.

D'autres caractéristiques et avantages de la présente invention apparaîtront mieux à la lecture de la description qui suit en relation aux dessins annexés suivants.

[Fig. 1] la figure 1 représente un schéma générique d'un récepteur selon l'un quelconque des modes de réalisation de l'invention,

[Fig. 2] la figure 2 représente un organigramme détaillant les étapes de mise en œuvre de la méthode de réception selon l'un des quelconque modes de réalisation de l'invention,

[Fig. 3] la figure 3 représente un schéma d'un récepteur selon un mode de réalisation particulier de l'invention exploitant une base de Fourier,

[Fig. 4] la figure 4 illustre un exemple de projection d'un symbole modulé 2-PPM sur une composante d'une base de Fourier,

[Fig. 5] la figure 5 représente un diagramme de taux d'erreurs bits en fonction d'un rapport signal à bruit pour différents paramètres de configuration de la méthode selon l'invention,

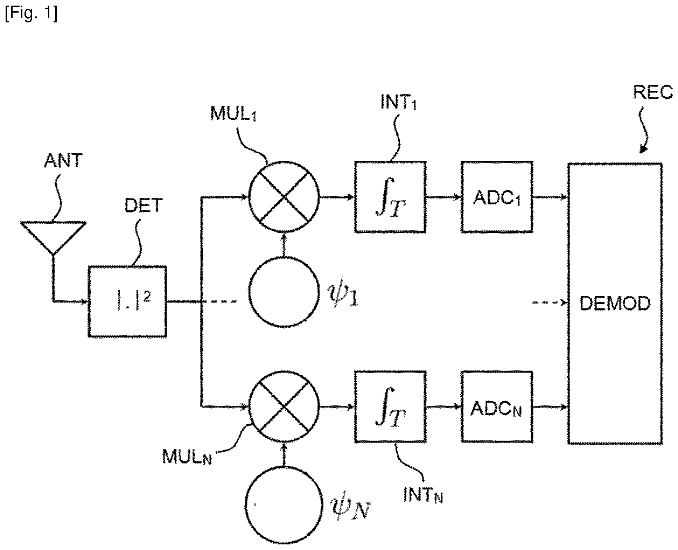

La figure 1 représente un schéma générique d'un récepteur selon l'invention.

Le signal reçu est un signal modulé par une modulation d'amplitude une modulation en position d'impulsions ou en largeur d'impulsions, par exemple une modulation en position d'impulsions (PPM) ou une modulation à largeur d'impulsions (PWM) ou une modulation d'impulsions en amplitude (PAM) ou une modulation d'amplitude de type « On-Off Keying » (OOK).

Le signal est avantageusement un signal transmis dans le spectre sub-TeraHertz de l'ordre de 90 à 300 GHz.

L'invention concerne un récepteur pour de tels signaux, aussi le dispositif d'émission n'est pas décrit en détail car il est supposé faire partie des connaissances générales du domaine de la transmission des signaux large bande modulés en amplitude.

Le récepteur REC large bande proposé comprend un moyen de réception d'un signal radiofréquence large bande comprenant notamment une ou plusieurs antennes ANT et une chaine de réception analogique (non représentée à la figure 1) comprenant un ou plusieurs filtres analogiques et/ou un ou plusieurs convertisseurs de fréquence.

Le signal analogique reçu est ensuite traité par un détecteur quadratique DET qui réalise une fonction analogique équivalent à la mise au carré du signal reçu. Le détecteur quadratique DET est, par exemple, réalisé au moyen d'une diode ou d'un dispositif auto-mélangeur.

Le signal de sortie du détecteur quadratique DET est ensuite projeté, via une ou plusieurs branches de projections, sur une base de signaux analogiques $\psi_1,... \psi_N$. Il peut s'agir d'une base de Fourier ou d'une base d'Hadamard ou de toute autre base de projection défini par des signaux analogiques.

Le nombre de signaux de la base est au moins égal à 1.

Les projections sont réalisées, sur chaque branche, par un multiplicateur $MUL_1,...MUL_N$ analogique suivi d'un intégrateur analogique $INT_1,...INT_N$.

Le signal de sortie du détecteur quadratique DET est ainsi multiplié, sur chaque branche de projection, par une fonction $\psi_i(t)$ de la base de projection.. Lorsque la base de projection est une base de Fourier, la fonction $\psi_i(t)$ est une fonction complexe de type $\exp(j\varphi_i(t))$ qui peut être générée au moyen d'un oscillateur de fréquence et d'un déphaseur.

Lorsque la base de projection est une base de Hadamard, la fonction $\psi_i(t)$ est une fonction réelle calculée à partir d'une fonction de base de type fonction porte.

Chaque intégrateur $INT_1,...INT_N$ réalise une intégration du signal de sortie d'un multiplicateur sur une durée $T_i$ égale à un multiple de la durée d'un symbole $T_s$ du signal modulé. On note $T_i = L. T_s$ avec L un entier strictement positif.

Les signaux de sortie des intégrateurs sont ensuite numérisés via des convertisseurs analogique-numérique $ADC_1,...ADC_N$ qui échantillonnent les signaux à une fréquence d'échantillonnage au moins égale à $Fe=1/T_i$.

Les signaux numérisés sur les différentes branches de projection sont regroupés dans un vecteur qui est produit en entrée d'un démodulateur numérique DEMOD qui effectue la démodulation conjointe des composantes du vecteur en utilisant un algorithme du maximum de vraisemblance.

Le récepteur REC selon l'invention présente plusieurs avantages vis-à-vis des techniques de l'art antérieur.

L'utilisation d'un détecteur quadratique en amont du récepteur permet de s'affranchir de la phase du signal et ainsi de limiter l'impact du bruit de phase malgré la fréquence élevée de la porteuse du signal.

Dans le cas d'une base de Fourier, la projection du signal sur cette base de signaux analogiques implique que les oscillateurs de fréquence fonctionnent à des fréquences très petites par rapport à la fréquence porteuse du signal, ce qui permet encore de réduire l'impact du bruit de phase. Les fréquences des oscillateurs sont de l'ordre de la fréquence des symboles transmis et peuvent être générées de manière fiable avec un bruit de phase négligeable.

Enfin, la parallélisation des traitements sur plusieurs branches de projection permet de diminuer la fréquence d'échantillonnage de chaque convertisseur analogique-numérique malgré la largeur du spectre du signal reçu.

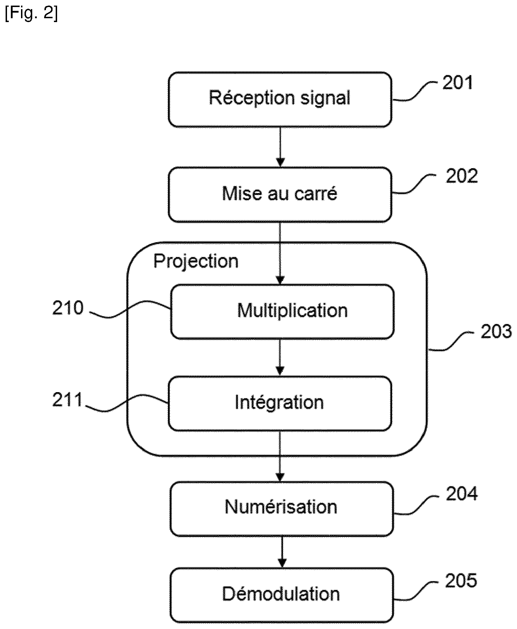

La figure 2 représente un organigramme des étapes de mise en œuvre d'une méthode de réception d'un signal large bande selon l'invention.

La méthode présentée à la figure 2 correspond à celle exécutée par un récepteur REC du type de la figure 1.

Elle comprend une étape de réception du signal 201, une étape de mise au carré du signal 202, une étape de projection 203 de l'énergie du signal sur une ou plusieurs branches de projection, une étape de numérisation 204 des signaux projetés sur chaque branche et une étape de démodulation 205 conjointe des signaux numérisés sur chaque branche regroupés dans un vecteur. L'étape de projection 203 comporte, pour chaque branche, une étape de multiplication 210 du carré du signal avec une composante d'une base de signaux analogique puis une étape d'intégration 211 du résultat sur une durée d'intégration au moins égale à la durée d'un symbole modulé.

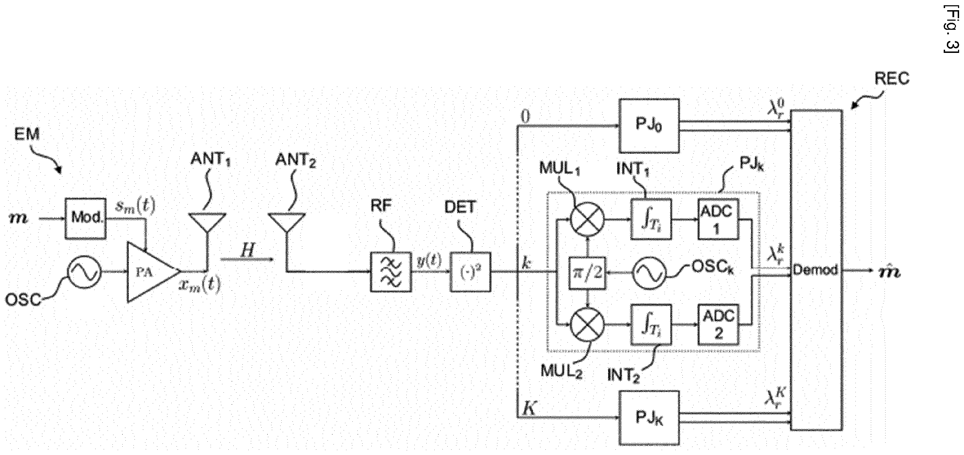

La figure 3 illustre un schéma d'un récepteur selon un mode de réalisation particulier de l'invention pour lequel la base de signaux analogiques est une base de Fourier.

A titre illustratif, on a représenté sur la gauche de la figure 3 un émetteur EM d'un signal large bande modulé en amplitude. L'émetteur EM comporte un modulateur d'amplitude MOD qui converti des symboles m en un signal modulé $S_m(t)$. Le signal modulé est amplifié et converti sur la fréquence porteuse souhaitée via une chaine de traitement analogique comprenant un amplificateur PA et un oscillateur de fréquence OSC. Le signal analogique large bande est émis via un moyen d'émission comportant au moins une antenne $ANT_1$.

Le récepteur comporte sensiblement les mêmes éléments que celui de la figure 1, à savoir une chaine radiofréquence RF, un détecteur quadratique DET, plusieurs chaines de projection $PJ_0, PJ_k, PJ_K$ et un démodulateur DEMOD. Les projections du signal sont réalisées sur une base de signaux de Fourier.

Chaque chaine de projection comporte un oscillateur de fréquence $OSC_k$ pour générer un signal à la fréquence d'une composante d'une base de Fourier $e_k(t) = exp\left(j2\pi\frac{k}{T_i}t + j\theta_k\right)$, avec $T_i$ la durée d'intégration du signal et $\theta_k$ une phase résiduelle.

Le signal obtenu est multiplié au signal de sortie du détecteur quadratique DET via deux multiplicateurs $MUL_1$, $MUL_2$ de deux voies en quadrature I,Q respectives déphasées de $\pi/2$.

Chaque chaine de projection comporte aussi deux intégrateurs $INT_1, INT_2$ de durée d'intégration Ti et deux convertisseurs analogique numérique $ADC_1, ADC_2$ qui fonctionnent à une fréquence d'échantillonnage au moins égale à $Fe = 1/T_i$.

Les symboles complexes obtenus en sortie de chaque branche de projection sont fournis, sous forme d'un vecteur $\lambda_r = [\lambda_r^0, ..., \lambda_r^k, ... \lambda_r^K]$, à un démodulateur numérique DEMOD qui démodule le signal pour restituer les symboles émis m.

Les symboles en entrée du démodulateur peuvent être exprimés via la relation suivante :

$$\lambda_r = H.\lambda_m + \lambda_w$$

H est la fonction de transfert qui modélise le gain de propagation du canal entre l'émetteur et le récepteur,
$\lambda_m$ est un vecteur de symboles complexes qui dépend des symboles m d'information qui ont été émis et qui est connu du récepteur,
$\lambda_w$ est un vecteur qui modélise l'impact du bruit.

Les coordonnées du vecteur $\lambda_r$ sont exprimées via la relation suivante :

$$\lambda_r^k = \int_0^{T_i} y^2(t).e_k(t)^* dt$$

y(t) est le signal analogique reçu,
$e_k(t)$ correspond aux signaux de la base de projection.

De la même façon, le vecteur $\lambda_m$ est exprimé via la relation suivante :

$$\lambda_m^k = \int_0^{T_i} x_m^2(t) \cdot e_k(t)^* dt$$

$x_m(t)$ est le signal modulé émis à partir de la séquence de symboles m=($m_1$,...$m_L$), avec L= $T_i/T_s$ le nombre de symboles intégrés.

Le démodulateur numérique DEMOD implémente un algorithme de démodulation basé sur le critère du maximum de vraisemblance pour détecter à quel symbole vectoriel émis $\lambda_m$, le symbole vectoriel reçu $\lambda_r$ est le plus proche. Ainsi, toutes les composantes du symbole reçu $\lambda_r$ sont démodulées conjointement pour retrouver la séquence émise m.

Autrement dit, l'algorithme de démodulation vise à détecter quel est le symbole vectoriel émis $\lambda_m$ le plus probable. A partir du symbole vectoriel $\lambda_m$ démodulé, on peut retrouver la séquence de symboles m émise.

La relation entre chaque séquence de symboles m et le symbole vectoriel $\lambda_m$ correspondant peut être déterminée a priori, analytiquement ou bien par estimation lors d'une phase préalable de synchronisation durant laquelle des symboles pilotes connus de l'émetteur et du récepteur sont transmis.

Le critère de maximum de vraisemblance vise à rechercher la séquence de symboles $\hat{m}$ qui maximise la probabilité $p(\lambda_r|m,H)$ d'avoir émis la séquence m sachant le symbole vectoriel reçu $\lambda_r$ et la fonction de transfert du canal H.

Par construction, on démontre que $\hat{m}$ est la séquence de symboles qui minimise l'expression suivante :

$$\frac{\left|\lambda_r^0 - \mu_0(m)\right|^2}{\sigma_0^2} + ln\left(\sigma_0^2(m)\right) + \sum_{k=1}^{K} \frac{\left\|\lambda_r^k - \mu_k(m)\right\|^2}{\sigma_k^2(m)} + 2.ln\left(\sigma_k^2(m)\right)$$

$\mu_k(m)$ et $\sigma_k^2(m)$ sont respectivement la moyenne et la variance de la distribution des symboles $\lambda_m^k$ sur chaque branche de projection k et pour chaque valeur possible de m. Ces statistiques peuvent être estimées à l'aide de symboles de référence ou symboles pilotes ou calculées empiriquement à partir de calculs analytiques et d'une estimée du gain de propagation du canal H.

|.| désigne la distance Euclidienne réelle et ||.|| désigne la distance Euclidienne complexe.

Dans le cas où la modulation utilisée est une modulation PPM, l'énergie du signal modulé ne dépend pas du symbole transmis et le critère de décision du maximum de vraisemblance est simplifié. Il consiste à rechercher la séquence $\hat{m}$ qui minimise l'expression suivante :

$$\sum_{k=1}^{K} \frac{\left\|\lambda_r^k - H.\lambda_m^k\right\|^2}{2N-k}$$

Avec N un entier tel que 2N=B.$T_i$ +1, B étant la largeur de bande du signal.

Tout algorithme d'optimisation basé sur le critère de maximum de vraisemblance appliqué aux relations ci-dessus peut être utilisé pour implémenter le démodulateur DEMOD.

Le démodulateur numérique DEMOD peut être réalisé sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

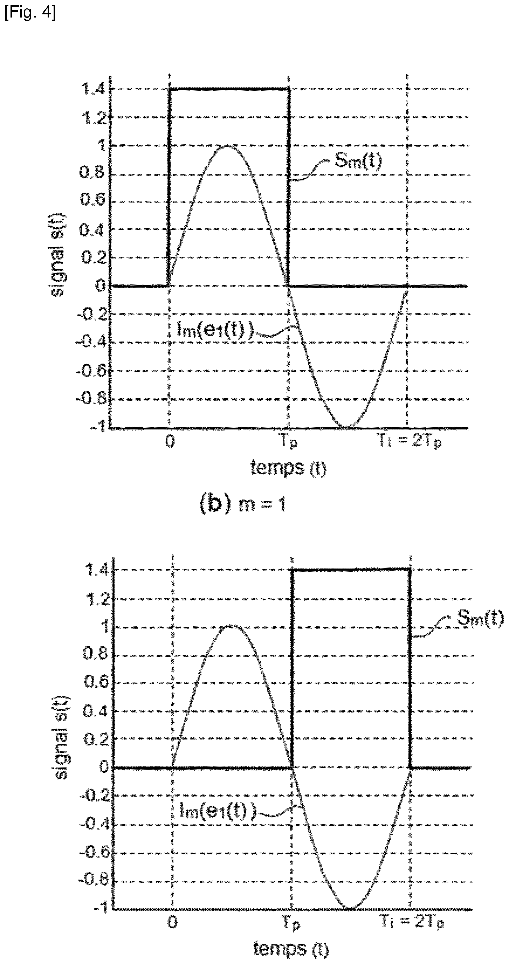

La figure 4 représente, à titre illustratif, un exemple de deux valeurs possibles d'un signal $s_m(t)$ modulé par une modulation 2-PPM et, sur les mêmes diagrammes, la partie imaginaire du signal $e_1(t)$ d'une base de Fourier.

La période d'intégration $T_i$ est, dans cet exemple, égale à 2 fois la durée d'une impulsion $T_p$.

Le signal de projection est $e_1(t) = sin(2\pi t/T_i)$.

Dans une architecture conventionnelle de récepteur PPM, l'énergie du signal reçu est mesurée pour toutes les positions possibles de l'impulsion modulée. La position correspondant au maximum d'énergie est utilisée pour estimer le symbole émis m. Ainsi, les récepteurs PPM de l'art antérieur nécessitent d'intégrer des convertisseurs analogique numérique à une fréquence d'échantillonnage $F_e=1/T_p$.

A l'inverse, l'invention permet de relâcher cette contrainte en fixant une durée d'intégration $T_i$ à un multiple de la durée d'une impulsion $T_p$. Dans l'exemple de la figure 4, la fréquence d'échantillonnage d'un récepteur selon l'invention peut donc être diminuée d'un facteur 2. Elle peut encore être réduite en démodulant conjointement plusieurs symboles.

L'invention permet le paramétrage du récepteur selon les compromis souhaités pour l'application visée.

En particulier, trois paramètres du récepteur peuvent être réglés selon les besoins : la fréquence d'échantillonnage $F_e$ des convertisseurs analogique numérique, le nombre de branches de projection K et le pas de quantification des convertisseurs Q. Il convient de noter que la fréquence d'échantillonnage $F_e$ est directement liée à la durée d'intégration $T_i$ et donc au nombre L de symboles démodulés conjointement.

Une valeur élevée de chacun de ces trois paramètres améliore les performances du récepteur en termes de taux d'erreurs binaire mais à l'inverse, renforce les contraintes d'implémentation sur des équipements à ressources limitées.

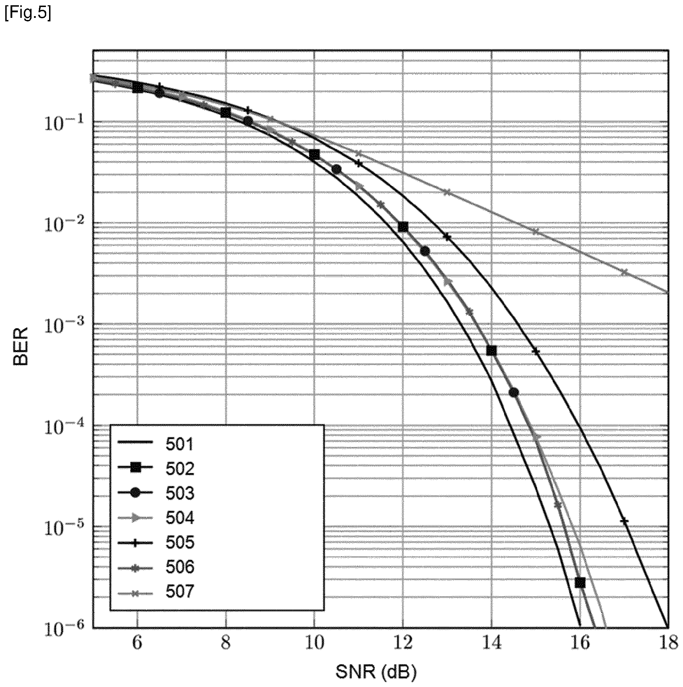

La figure 5 illustre les performances de taux d'erreurs binaire (BER pour bit error rate en anglais) en fonction du rapport signal à bruit (SNR pour signal-to-noise ratio en anglais) obtenues pour différentes configurations de la méthode selon l'invention.

Tous les résultats représentés à la figure 5 sont obtenus avec une modulation PPM d'ordre M=2 et une bande passante du signal $B=8/T_p$, avec $T_p$ la durée d'une impulsion du signal modulé, $T_i=M.T_p$.

Pour chaque courbe, des paramètres différents du nombre de symboles démodulés conjointement L, du nombre de branches de projection K et du pas de quantification Q sont considérés.

La courbe 501 est obtenue pour L=1, K=16 et $Q=2^{16}$.

La courbe 502 est obtenue pour L=1, K=16 et $Q=2^1$.

La courbe 503 est obtenue pour L=1, K=1 et $Q=2^4$.

La courbe 504 est obtenue pour L=4, K=16 et $Q=2^4$.

La courbe 505 est obtenue pour L=4, K=4 et $Q=2^4$.

La courbe 506 est obtenue pour L=1, K=1 et $Q=2^1$.

La courbe 507 est obtenue pour L=4, K=16 et $Q=2^2$.

La courbe 501 correspond aux meilleurs résultats en termes de taux d'erreur bits mais sans prise en compte des contraintes d'implémentation.

La figure 5 permet d'observer que des dégradations acceptables (inférieures à 0.5dB) sont obtenues lorsque les paramètres K et/ou Q sont contraints. Cependant, les courbes 505 et 507 montrent des dégradations plus importantes des performances lorsque le paramètre L est contraint, ce qui signifie directement une diminution de la fréquence d'échantillonnage $F_e$.

Ces résultats permettent d'illustrer le niveau de paramétrage possible de la méthode et du récepteur selon l'invention pour sélectionner les meilleurs compromis entre performances de démodulation et contraintes d'implémentation selon l'application visée.

## Revendications

1. Méthode de réception d'un signal modulé comprenant les étapes de :

   - Recevoir (201) un signal modulé par une modulation en position d'impulsions (PPM) ou une modulation à largeur d'impulsions (PWM) ou une modulation d'impulsions en amplitude (PAM) ou une modulation d'amplitude de type « On-Off Keying » (OOK), correspondant à la transmission d'une séquence d'un ou plusieurs symboles numériques consécutifs.
   - Effectuer la mise au carré (202) du signal reçu,
   - Projeter (203) le carré du signal reçu sur plusieurs composantes d'une base de signaux analogiques pour obtenir un vecteur analogique de dimension égale au nombre de composantes de projection, les composantes de la base de signaux analogiques étant des fonctions non constantes,
   - Numériser (204) le vecteur analogique en un vecteur numérique, Démoduler (205) conjointement les composantes du vecteur numérique au moyen d'un algorithme de maximum de vraisemblance pour estimer la séquence transmise d'un ou plusieurs symboles numériques consécutifs.

2. Méthode de réception d'un signal modulé en amplitude selon la revendication 1 dans laquelle l'étape de projeter le carré du signal reçu comprend les sousétapes de :

   - Multiplier (210) le carré du signal reçu par une composante de la base de signaux analogiques,
   - Intégrer (211) le résultat sur une durée d'intégration égale à un multiple de la durée d'un symbole du signal modulé.

3. Méthode de réception d'un signal modulé en amplitude selon l'une quelconque des revendications précédentes dans laquelle l'étape (204) de numériser le vecteur analogique en un vecteur complexe est réalisée à une fréquence d'échantillonnage au moins égale à l'inverse de la durée d'intégration.

4. Méthode de réception d'un signal modulé en amplitude selon l'une quelconque des revendications précédentes dans laquelle la base de signaux analogiques est une base de Fourier, chaque signal de la base étant généré à une fréquence multiple de l'inverse de la durée d'intégration.

5. Méthode de réception d'un signal modulé en amplitude selon l'une des revendications 1 à 3 dans laquelle la base de signaux analogiques est une base d'Hadamard.

6. Récepteur (REC) de signal modulé par une modulation en position d'impulsions (PPM) ou une modulation à largeur d'impulsions (PWM) ou une modulation d'impulsions en amplitude (PAM) ou une modulation d'amplitude de type « On-Off Keying » (OOK),comprenant une antenne (ANT) pour recevoir un signal modulé, correspondant à la transmission d'une séquence d'un ou plusieurs symboles numériques consécutifs, un détecteur quadratique (DET) du signal reçu, plusieurs branches de projection ($PJ_0, PJ_k, PJ_K$) de l'énergie détectée sur plusieurs composantes d'une base de signaux analogiques pour générer un signal projeté analogique complexe les composantes de la base de signaux analogiques étant des fonctions non constantes, au moins un convertisseur analogique numérique ($ADC_1, ADC_2$) connecté en sortie de chaque branche de projection et un démodulateur numérique (DEMOD) configuré pour démoduler conjointement les composantes d'un vecteur numérique constitué des sorties de chaque convertisseur au moyen d'un algorithme de maximum de vraisemblance pour estimer la séquence transmise d'un ou plusieurs symboles numériques consécutifs.

7. Récepteur selon la revendication 6 dans lequel chaque branche de projection comprend un générateur de fréquence (OSCk) apte à générer une fréquence d'une composante d'une base de Fourier, un déphaseur, au moins un multiplieur analogique ($MUL_1, MUL_2$) pour mélanger le signal de sortie du détecteur quadratique (DET) avec le signal de sortie du générateur de fréquence, déphasé ou non, au moins un intégrateur ($INT_1, INT_2$) pour intégrer le signal de sortie du multiplieur analogique sur une durée égale à un multiple de la durée d'un symbole de la modulation.

8. Récepteur selon l'une quelconque des revendications 6 ou 7 dans lequel la fréquence d'échantillonnage de chaque convertisseur analogique numérique ($ADC_1, ADC_2$) est au moins égale à l'inverse de la durée d'intégration d'un intégrateur ($INT_1, INT_2$).

## Patentansprüche

1. Verfahren zum Empfangen eines modulierten Signals, das die folgenden Schritte umfasst:

   - Empfangen (201) eines durch Pulspositionsmodulation (PPM) oder Pulsweitenmodulation (PWM) oder Pulsamplitudenmodulation (PAM) oder Amplitudenmodulation vom "On-Off Keying" (OOK)-Typ modulierten Signals, entsprechend der Übertragung einer Sequenz von einem oder mehreren konstitutiven digitalen Symbolen.
   - Quadrieren (202) des empfangenen Signals,
   - Projizieren (203) des Quadrats des empfangenen Signals auf mehrere Komponenten einer analogen Signalbasis, um einen analogen Vektor zu erhalten, dessen Dimension gleich der Anzahl der Projektionskomponenten ist, wobei die Komponenten der analogen Signalbasis nicht-konstante Funktionen sind,
   - Digitalisieren (204) des analogen Vektors in einen digitalen Vektor,
   - gemeinsames Demodulieren (205) der Komponenten des digitalen Vektors mit Hilfe eines Maximum-Likelihood-Algorithmus, um die übertragene Sequenz eines oder mehrerer aufeinanderfolgender digitaler Symbole zu schätzen.

2. Verfahren zum Empfangen eines amplitudenmodulierten Signals nach Anspruch 1, wobei der Schritt des Projizierens des Quadrats des empfangenen Signals die folgenden Teilschritte umfasst:

   - Multiplizieren (210) des Quadrats des empfangenen Signals mit einer Komponente der analogen Signalbasis,
   - Integrieren (211) des Ergebnisses über eine Integrationszeit von gleich einem Vielfachen der Zeitdauer eines Symbols des modulierten Signals.

3. Verfahren zum Empfangen eines amplitudenmodulierten Signals nach einem der vorherigen Ansprüche, wobei der Schritt (204) des Digitalisierens des analogen Vektors in einen komplexen Vektor bei einer Abtastfrequenz erfolgt, die mindestens gleich dem Kehrwert der Integrationsdauer ist.

4. Verfahren zum Empfangen eines amplitudenmodulierten Signals nach einem der vorherigen Ansprüche, wobei die analoge Signalbasis eine Fourierbasis ist, wobei jedes Signal der Basis mit einer Frequenz erzeugt wird, die ein Vielfaches des Kehrwerts der Integrationszeit beträgt.

5. Verfahren zum Empfangen eines amplitudenmodulierten Signals nach einem der Ansprüche 1 bis 3, wobei die analoge Signalbasis eine Hadamard-Basis ist.

6. Empfänger (REC) für ein Signal, das durch eine Pulspositionsmodulation (PPM) oder eine Pulsweitenmodulation (PWM) oder eine Pulsamplitudenmodulation (PAM) oder eine Amplitudenmodulation vom OOK-("On-Off Keying")-Typ moduliert wird, der eine Antenne (ANT) zum Empfangen eines modulierten Signals, entsprechend der Übertragung einer Sequenz von einem oder mehreren aufeinanderfolgenden digitalen Symbolen, einen quadratischen Detektor (DET) des empfangenen Signals, mehrere Projektionszweige ($PJ_0$, $PJ_k$, $PJ_K$) zum Projizieren der detektierten Energie auf mehrere Komponenten einer analogen Signalbasis, um ein komplexes analoges projiziertes Signal zu erzeugen, wobei die Komponenten der analogen Signalbasis nicht-konstante Funktionen sind, mindestens einen Analog-Digital-Wandler ($ADC_1$, $ADC_2$), der am Ausgang jedes Projektionszweigs verbunden ist, und einen digitalen Demodulator (DEMOD) umfasst, der zum gemeinsamen Demodulieren der Komponenten eines durch die Ausgänge jedes Wandlers gebildeten digitalen Vektors mit Hilfe eines Maximum-Likelihood-Algorithmus konfiguriert ist, um die übertragene Sequenz eines oder mehrerer aufeinanderfolgender digitaler Symbole zu schätzen.

7. Empfänger nach Anspruch 6, wobei jeder Projektionszweig einen Frequenzgenerator (OSCk), der eine Frequenz einer Komponente einer Fourierbasis erzeugen kann, einen Phasenschieber, mindestens einen analogen Multiplizierer ($MUL_1$, $MUL_2$) zum Mischen des Ausgangssignals des quadratischen Detektors (DET) mit dem Ausgangssignal des Frequenzgenerators, phasenverschoben oder nicht, mindestens einen Integrator ($INT_1$, $INT_2$) zum Integrieren des Ausgangssignals des analogen Multiplizierers über eine Zeitdauer von gleich einem Vielfachen der Zeitdauer eines Symbols der Modulation umfasst.

8. Empfänger nach Anspruch 6 oder 7, wobei die Abtastfrequenz jedes Analog-Digital-Wandlers ($ADC_1$, $ADC_2$) mindestens gleich dem Kehrwert der Integrationsdauer eines Integrators ($INT_1$, $INT_2$) ist.

## Claims

1. Method for receiving a modulated signal, comprising the steps of:

   - receiving (201) a signal modulated by a pulse position modulation (PPM) or a pulse width modulation (PWM) or a pulse amplitude modulation (PAM) or an on-off keying (OOK) amplitude modulation, corresponding to the transmission of a sequence of one or more consecutive digital symbols,
   - squaring (202) the received signal,
   - projecting (203) the square of the received signal onto multiple components of an analogue signal basis in order to obtain an analogue vector of dimension equal to the number of projection components, the components of the analogue signal basis being non-constant functions,
   - digitizing (204) the analogue vector into a digital vector,
   - jointly demodulating (205) the components of the digital vector by way of a maximum likelihood algorithm in order to estimate the transmitted sequence of one or more consecutive digital symbols.

2. Method for receiving an amplitude-modulated signal according to claim 1, wherein the step of projecting the square of the received signal comprises the sub-steps of:

   - multiplying (210) the square of the received signal by a component of the analogue signal basis,
   - integrating (211) the result over an integration duration equal to a multiple of the duration of a symbol of the modulated signal.

3. Method for receiving an amplitude-modulated signal according to any one of the preceding claims, wherein the step (204) of digitizing the analogue vector into a complex vector is performed at a sampling frequency at least equal to the reciprocal of the integration duration.

4. Method for receiving an amplitude-modulated signal according to any one of the preceding claims, wherein the analogue signal basis is a Fourier basis, each signal of the basis being generated at a frequency that is a multiple of the reciprocal of the integration duration.

5. Method for receiving an amplitude-modulated signal according to one of claims 1 to 3, wherein the analogue signal basis is a Hadamard basis.

6. Receiver (REC) for a signal modulated by a pulse position modulation (PPM) or a pulse width modulation (PWM) or a pulse amplitude modulation (PAM) or an on-off keying (OOK) amplitude modulation, comprising an antenna (ANT) for receiving a modulated signal, corresponding to the transmission of a sequence of one or more consecutive digital symbols, a quadratic detector (DET) of the received signal, multiple projection branches ($PJ_0$, $PJ_k$, $PJ_K$) for projecting the detected energy onto multiple components of an analogue signal basis in order to generate a complex analogue projected signal, the components of the analogue signal basis being non-constant functions, at least one analogue-to-digital converter ($ADC_1$, $ADC_2$) connected at the output of each projection branch and a digital demodulator (DEMOD) configured so as to jointly demodulate the components of a digital vector formed by the outputs of each converter by way of a maximum likelihood algorithm in order to estimate the transmitted sequence of one or more consecutive digital symbols.

7. Receiver according to claim 6, wherein each projection branch comprises a frequency generator (OSCk) able to generate a frequency of a component of a Fourier basis, a phase shifter, at least one analogue multiplier ($MUL_1$, $MUL_2$) for mixing the output signal from the quadratic detector (DET) with the output signal from the frequency generator, the latter being phase-offset or not, at least one integrator ($INT_1$, $INT_2$) for integrating the output signal from the analogue multiplier over a duration equal to a multiple of the duration of a symbol of the modulation.

8. Receiver according to any one of claims 6 or 7, wherein the sampling frequency of each analogue-to-digital converter ($ADC_1$, $ADC_2$) is at least equal to the reciprocal of the integration duration of an integrator ($INT_1$, $INT_2$).

[Fig. 1]

[Fig. 2]

```
┌─────────────────────────┐
│     Réception signal     │────  201
└─────────────────────────┘
             │
             ▼
┌─────────────────────────┐
│       Mise au carré      │────  202
└─────────────────────────┘
             │
             ▼
╭─────────────────────────────────╮
│  Projection                     │
│         ┌──────────────────┐    │
│  210 ───│   Multiplication │    │
│         └──────────────────┘    │──── 203
│                │                │
│                ▼                │
│         ┌──────────────────┐    │
│  211 ───│    Intégration   │    │
│         └──────────────────┘    │
╰─────────────────────────────────╯
             │
             ▼
┌─────────────────────────┐
│       Numérisation       │────  204
└─────────────────────────┘
             │
             ▼
┌─────────────────────────┐
│       Démodulation       │────  205
└─────────────────────────┘
```

[Fig. 3]

[Fig. 4]

(b) m = 1

[Fig.5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050232381 A

**Littérature non-brevet citée dans la description**

- **QIN ZHOU et al.** A flexible back-end with optimum threshold estimation for OOK based energy detection IR-UWB receivers. *IEEE INTERNATIONAL CONFERENCE ON ULTRA-WIDEBAND,* 14 Septembre 2011, ISBN 978-1-4577-1763-5, 130-134